# EUROPEAN PATENT SPECIFICATION

(11) **EP 1 159 111 B1**
(45) Date of publication and mention of the grant of the patent: **21.12.2005**
(21) Application number: 00903731.8
(22) Date of filing: 10.02.2000
(51) Int. Cl.: B27B 13/10, B27B 5/29

(54) **SAWING METHOD FOR LOOSENING A WOOD BOARD**
SÄGEVERFAHREN ZUM ABSCHNEIDEN EINES HOLZBRETTES
PROCEDE DE SCIAGE PERMETTANT DE DECOUPER UNE PLANCHE DE BOIS

(30) Priority: 10.02.1999 FI 990260
(43) Date of publication of application: 05.12.2001
(73) Proprietor: Joint Capital oy Solwo, 00101 Helsinki (FI)
(72) Inventor: VILJANEN, Reijo, La Matanza, Teneriffe (ES)
(74) Representative: Nieminen, Taisto Tapani
(86) International application number: PCT/FI2000/000095
(87) International publication number: WO 2000/047378

(56) References cited:
- EP-A1- 0 535 296
- SE-B- 436 849
- US-A- 4 313 172
- US-A- 4 991 475
- US-A- 5 030 910

## Description

The invention relates to a sawing method, with which the sawing accuracy will remarkable be improved while sawing loose from the blank specially thin wooden boards, like loosening glued woodboards from the woodbeam blank. Such methods are known for example from SE-A-436,849 and EP-A-0,535,296.

Also known is a sawing method for glued woodboards from WO-publication 98/12030. In this method the blank is sawed split from the centre and the next halves again sawed split from the centre and so forward until in the last split the desired, thin glued woodboard is born. When the sawing is happening symmetrically the quite exact sawing result as a final result, if the blank is homogeneous and it has an equal quality.

When the timber is not equal quality and homogeneous even when sorted, the saw blade does not necessarily keep its aimed direction, if the blade is going to contact in the blank assymmetrically being disturbing factor. This kind of factors are for ex. knots or their remains or sudden grain density changes. In the loose sawing of woodboards the sawing wideness is f.ex. 200 - 600 mm, or even wider, when the blade would have to keep its direction without supporting equipment equally about 300 - 700 mm's distance or eventually longer distance.

For this reason a remarkable improvement has been developed in the way of sawing, with which improvement the blade can be guided, if it starts to turn side from the aimed exact sawing line. Characteristic to the invention is what is presented in the claims.

By means of the invention noticeable advantages is reached, for that the sawing result is going to be made sure, the sawing wideness can be raised, the sawing speed can be lifted and the sawing method can be applied also for sawing other non-magnetic materials than timber.

In the following the invention is explained closer by referring to the enclosed drawing, where
Figure 1 shows a sawing method according to the invention.
Figure 2 shows schematically the blade guidance control.

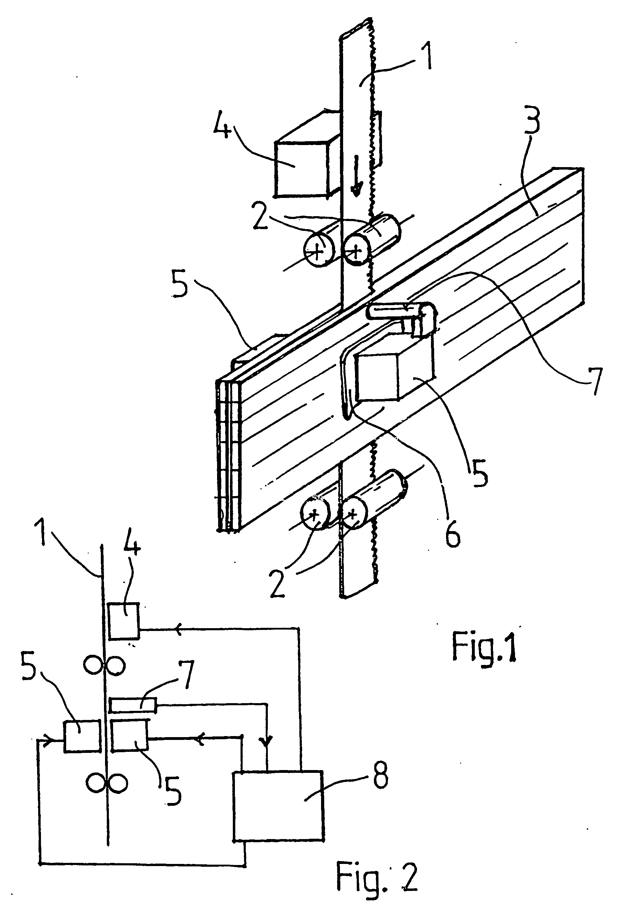

In the figure 1 there is shown from a blank 3 by means of band saw performed glued woodboard loose sawing. The sawing is done by sawing the blank split from the middle by means of a blade 1. The blade 1 is guided by means of the apparatus included rollers 2 before and after the sawing. The distance between rollers 2 is adjustable depending by the hight of the blank 3.

The aimed line of sawing is straight from the middle to the split of the blank. Blade 1 should so to stay also between the area of rollers 2 in the aimed centre line. When sawing broad woodboards, the blank hightness becomes noticeable and the support points of the blades 1, in other words rollers 2, will locate far from each other. The blade's 1 staying in the middle line is secured according to the invention by utilizing magnetic power systems. The blade 1 has to be ferromagnetic or electricity conducting material, to which by means of at least two magnetic fields causes forces for pulling or pushing farther away.

The arrangement according to the invention comprises measuring of the position of the blade 1 in one or several points between the support rollers 2. The measuring device 7 is for. ex. with echo sounding princible functioning which measures throught the board the distance of the blade. The measuring principle can also be capasitive, where a capacitor is formed between the measuring device and the blade, wherein the capacitors capacitance is changing due to the distance of the blade. When the blade 1 begins to transverse due to some disturbance from the center line, begins the blade front edge, in other words the edge with teeths, first to transverse from the line. For that reason the measuring device is to be directed towards the area of the front edge of the blade.

On the both sides of the blank 3 there are confront to the blade 1 an equipment to form a magnetic field 5, by means of which the blade 1 is either pulled or pushed by magnetic forces in side direction. The equipment 5 are for ex. earlier known with D.C. current formed magnets, power of which is controlled by supply of the current and one pole or both poles of the magnet are directed towards the blade 1. The equipments 5 are located on the both sides of the blade, preferably symmetrically and they can operate by means of controlling either at separate time depending to which side the blade is turning, wherein only one device is pulling or pushing the blade or they are operating at the same time, wherein the other pulls and the other pushes.

Also the situation is possible that both are pulling or pushing the blade at the same time. The magnetic polarity of the device 5 can be, as known change by changing the direction of D.C. current supplied to the device.

If the sawing broadness (height of the blank) is big several distance measuring devices 7 can be equipped to control the blade and several devices to form the magnetic field 5 between the support rollers 2. If the blade has tendency to surging or natural vibration, these phenomenons can be removed by controlling the blade by means of magnetic forces.

If the magnetic polarity is desired to obtain for the blade 1, the blade 1 can be magneticed either with the help of around the blade placed D.C. current coil or with the help of on the side of the blade locating magneticing device 4. The control forces that is directed to the blade can be increased by this arrangement..

One alternative is to lead D.C. current or changing D.C. current trough the blade at least over the sawing point, wherein the blade is electric current conductiing conductor at the sawing point. The electric current to the blade 1 is got for. ex. by the help of draging current coals. By means of the magnetic field forming device 5 is equally produced to "the electric conductor" in other words to the blade 1 then force influences even in this case.

In figure 2 there is shown a control system as a scheme. The system comprises a control unit 8, getting from the distance measuring gauge 7 information oft the blade position in relation to the centre line. Based on this information the unit steers the magnetic field forming devices 5 to return the blade 1 to the centre line, if it is trying to go away from it. The unit controls also the magneticing device 4 by giving it either as constant remaining or controlled magneticing power. The control system is possible to manufacture as fast reacting and back coupled, wherein the blade line can be kept stable.

At the suitable point before the blade gets into the sawing situation, the magneticing can be removed from that for example by means of A.C. current. Then the blade 1 is easier either magneticed to a certain degree or left neutral when it arrives to the point of magnetic field forming devices 5.

As a steerable blade according to the invention can be used a band saw blade, a broad and thin knife blade or also a circular saw blade. The stability of the circular saw blade is improved by means of the method according to the invention especially in that point when the blade is inside the sawed material.

For example when the band saw blade is in question, a band saw blade can by means of the method according to the invention be steered also to go diverging to the normal fully straight line by compelling it by means of magnetic forces, in the distance between the support rollers 2, into a bowed position and keep it in that by means of steering.

## Claims

1. A sawing method for cutting a woodboard or a board of other non-magnetic material from an elongated blank (3), in order to achieve better sawing line accuracy and to stabilize blade movements, in which method the sawing is carried out in the longitudinal direction of said blank by means of a metallic band saw blade (1), having teeth in its front cutting edge wherein said blank is fed towards said blade (1) and further said saw blade is steered to stay in the intended sawing line, whereby the side position of
- the blade (1) inside the movable blank (3) is measured through the sawed blank by means of a distance gauge device (7) and
- the desired blade steering force in the side direction is led to the inside of the blank by means of a magnetic field forming device (5) located on both outer sides of said blank, enabling said blade to be steered by either being pulled or pushed by magnetic forces being based on the distance value calculated by said gauge device (7).

2. A method according to claim 1 **characterized in that** to the blade (1) is caused magnetic polarity by means of a magneticing device (4).

3. A method according to claim 1 **characterized in that** to the blade (1) is caused magnetic polarity by forming it as a D.C conductor at least at the point of sawing.

4. A method according to any of the previous claims 1 - 3 **characterized in that** the distance measuring from the blade and the influence of magnetic force to the blade are centralized to happen from the edge of the blade, which has toothing.

5. A method according to any of the previous claims 1 - 4 **characterized in that** in the method the blank (3) is sawed split in the middle.

## Patentansprüche

1. Eine Sägemethode zum Trennen einer Holzscheibe oder eine Scheibe aus anderem nichtmagnetischen Material von einem länglichen Halbzeug (3), um bessere Präzision der Sägelinie zu erreichen und um die Bewegungen der Klinge zu stabilisieren, bei welcher Methode das Sägen in Längsrichtung des erwähnten Halbzeuges mit der Klinge (1) einer metallischen Bandsäge ausgeführt wird, wobei die Klinge Verzahnung in ihrer Vorderkante hat, wo das erwähnte Halbzeug gegen die erwähnte Klinge (1) gefördert wird, und dass die erwähnte Klinge (1), um auf der gemeinten Sägelinie zu bleiben, gesteuert wird, wobei
- die Seitenlage der Klinge (1) drinnen in dem bewegenden Halbzeug durch das gesägte Halbzeug mit einem Distanzmessers (7) gemessen wird,
- nötige Steuerungskraft in der Seitenrichtung zu der Klinge drinnen im Halbzeug geleitet wird, und zwar mit einem Apparat (5) auf einer oder beiden Außenseiten des genannten Halbzeugs, der ein Magnetfeld bildet, und die genannte Klinge von der Steuerungskraft gestoßen/gezogen wird und die genannte Kraft sich auf die Anzeige des Distanzmessers (7) gründet.

2. Eine Methode gemäss Patentanspruch 1 **gekennzeichnet dadurch, dass** man in die Klinge (1) magnetische Polarität mit magnetisierenden Apparat (4) verursacht hat.

3. Eine Methode gemäss Patentanspruch 1 **gekennzeichnet dadurch, dass** man in die Klinge (1) magnetische Polarität verursacht wird, indem man sie als einen G.S. Leiter, wenigstens im Sägepunkt gebildet hat.

4. Eine Methode gemäss einem der obigen Patentansprüchen 1 - 3 **gekennzeichnet dadurch, dass** das Distanzmessen aus der Klinge und die Wirkung der magnetischen Kraft auf die Klinge zu geschehen zentriert werden, von der Kante der Klinge, die Verzahnung hat.

5. Eine Methode gemäss einem der obigen Patentansprüchen 1 - 4 **gekennzeichnet dadurch, dass** bei der Methode das Halbzeug mit der Säge von der Mitte gespaltet wird.

## Revendications

1. Une méthode de sciage pour découper un carton de pâte mécanique ou un autre panneau de matériau non magnétique d'une ébauche (3) de forme allongée, afin d'obtenir une meilleure précision de la ligne de sciage et de stabiliser les mouvements de la lame, selon laquelle méthode le sciage est effectué dans le sens longitudinal de ladite ébauche et au moyen d'une lame de scie à ruban (1) métallique munie de dents sur son bord avant, et, selon laquelle méthode, ladite ébauche est avancée vers ladite lame (1) et, de plus, ladite lame de scie est guidée de manière à ce qu'elle reste sur la ligne de sciage prévue, et dans laquelle méthode
- la position de la lame (1) à l'intérieur de l'ébauche à scier (3) est mesurée à travers cette ébauche au moyen d'un indicateur de distance (7),
- la force nécessaire pour guider la lame latéralement est dirigée, à l'aide d'un dispositif (5) formant un champ magnétique, vers la lame se trouvant à l'intérieur de l'ébauche, ce dispositif étant situé d'un côté ou des deux côtés de ladite ébauche et la force poussant et/ou tirant ladite lame, ladite force étant basée sur la valeur de distance indiquée par le dispositif de mesure (7).

2. Une méthode selon la revendication 1, **caractérisée en ce qu'**une polarité magnétique est produite à la lame (1) au moyen d'un dispositif magnétisant (4).

3. Une méthode selon la revendication 1, **caractérisée en ce qu'**une polarité magnétique est produite à la lame (1) en la transformant en un conducteur de courant continu à la hauteur au moins du point de sciage.

4. Une méthode selon l'une quelconque des revendications précédentes 1 à 3, **caractérisée en ce que** la mesure de distance ainsi que l'impact sur la lame de la force magnétique sont centralisés de façon à s'effectuer depuis le bord denté de la lame.

5. Une méthode selon l'une quelconque des revendications précédentes 1 à 4, **caractérisée en ce que,** selon la méthode, l'ébauche (3) est sciée en deux au milieu.
